# FASCICULE DE BREVET EUROPEEN

(11) **EP 1 323 223 B1**
(45) Date de publication et mention de la délivrance du brevet: **27.07.2005**
(21) Numéro de dépôt: 01976367.1
(22) Date de dépôt: 05.10.2001
(51) Int. Cl.: H02K 7/116, H02K 29/08, F02D 11/10

(54) **MOTO-REDUCTEUR COMMUTE SUR UN SIGNAL DE POSITION ABSOLU**
ÜBER EIN SIGNAL DER ABSOLUTPOSITION COMMUTIERTER GETRIEBEMOTOR
MOTOR-REDUCTION UNIT SWITCHED ON AN ABSOLUTE POSITION SIGNAL

(30) Priorité: 06.10.2000 FR 0012829
(43) Date de publication de la demande: 02.07.2003
(73) Titulaire: Moving Magnet Technologies, 25000 Besançon (FR)
(72) Inventeur: PRUDHAM, Daniel, F-25220 Thise (FR)
(74) Mandataire: Breese, Pierre
(86) Numéro de dépôt international: PCT/FR2001/003081
(87) Numéro de publication internationale: WO 2002/029959

(56) Documents cités:
- EP-A- 0 414 941
- EP-A- 0 856 939
- EP-A- 1 028 239
- US-A- 5 452 697
- US-B1- 6 198 275
- PATENT ABSTRACTS OF JAPAN vol. 013, no. 586 (P-982), 25 décembre 1989 (1989-12-25) & JP 01 248010 A (HITACHI LTD;OTHERS: 01), 3 octobre 1989 (1989-10-03)
- PATENT ABSTRACTS OF JAPAN vol. 1998, no. 04, 31 mars 1998 (1998-03-31) -& JP 09 322584 A (MATSUSHITA ELECTRIC IND CO LTD), 12 décembre 1997 (1997-12-12)

## Description

La présente invention concerne le domaine des actionneurs à moto-réducteurs, comprenant un moteur électrique accouplé à un mécanisme de réduction de vitesse.

On entend par actionneur un moyen d'entraînement en rotation d'un organe, dont la course est inférieure à 360°. La fonction d'un actionneur est d'assurer un positionnement angulaire précis et répétitible, sous la commande d'un circuit de pilotage. Il se distingue d'un moteur dont la fonction est de faire tourner un organe à une vitesse de rotation donnée, sous forme de n tours par minutes sans limite angulaire.

On connaît dans l'art antérieur de nombreux moto-réducteurs utilisés dans le domaine automobile des vannes de contrôles de débit d'air, de recirculation de gaz, ou de climatisation d'air. Ces vannes sont habituellement constituées d'un moteur courant continu à balais, d'un ou 2 étages de réduction mécanique, et d'un potentiomètre de recopie de position de l'arbre de sortie. On trouvera une description d'une telle motorisation dans le brevet américain 5,672,818 ou dans le brevet européen EP1009089.

Le désavantage de ces solutions est l'utilisation d'un moteur à collecteur, ayant une durée de vie limitée dans des applications exigeantes en terme de température et de vibrations. De même les potentiomètres utilisés jusqu'à présent ont une durée de vie limitée du fait de la présence de balais.

On connaît également dans l'art antérieur le brevet japonais 09322584 décrivant un moteur et non pas un actionneur. Ce moteur comporte un réducteur de vitesse entraînant un capteur de position relative et non pas absolu.

Le capteur décrit dans ce document de l'art antérieur délivre deux signaux sinusoïdaux déphasés de 90°, qui sont des signaux de position relative et non pas absolu.

On connaît aussi le brevet EP0856939 qui ne décrit pas un moyen de pilotage du moteur à partir du signal délivré par un capteur de position absolue, mais un détecteur de fin de course. Il comporte un circuit de commande du moteur activé par un circuit d'interruption piloté par le capteur de position délivrant une information de fin de course.

Les fabricants de ce type de vanne travaillent donc tous à l'introduction de moteurs "sans balais", qui sont des moteurs synchrones autocommutés par des signaux d'encodeurs intégrés au moteur, et à l'intégration de capteurs de position sans contact (de type magnétique, inductif ou capacitif) pour remplacer les solutions avec balais.

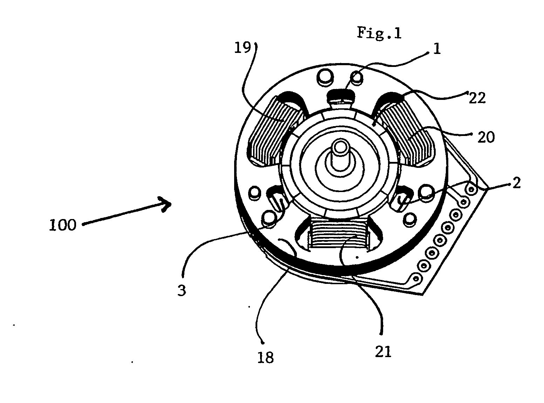

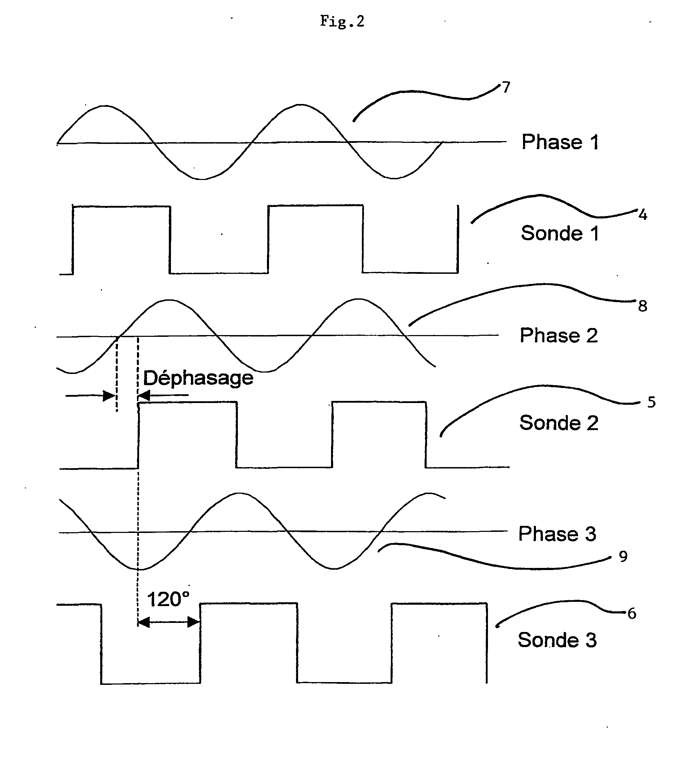

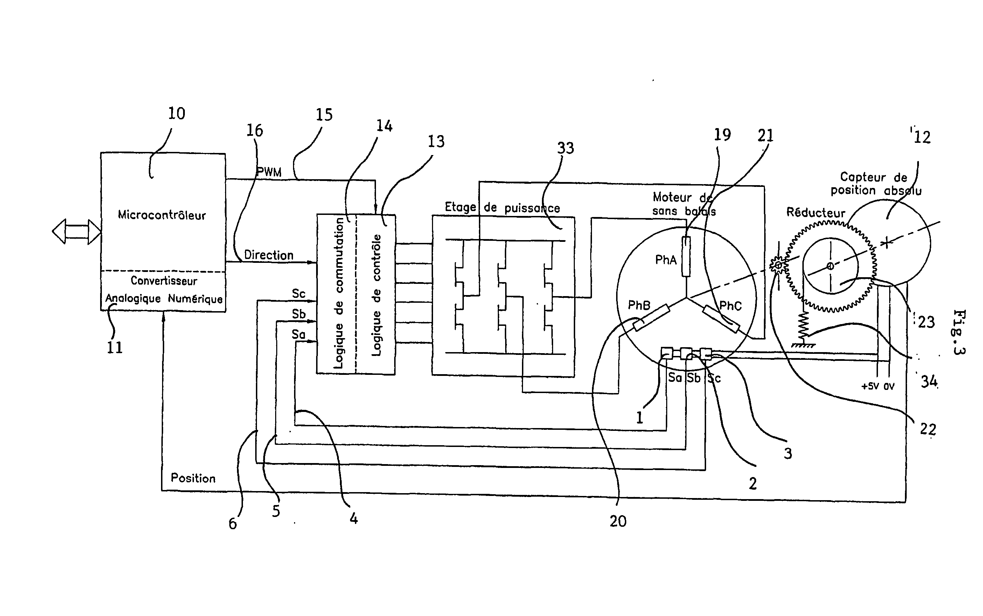

Les moteurs à courant continu sans balai (moteurs brushless) sont connus dans l'état de l'art depuis de nombreuses années, dans des variantes polyphasées diverses, et on trouvera en figure 1 une vue d'un tel moteur triphasé (100) décrit dans le brevet US5,880,551 de la demanderesse. On voit sur cette figure 1, la position des 3 sondes à effet Hall ((1),(2),(3)), placées à l'intérieur de la denture (18), qui vont délivrer, comme indiqué sur la fig. 2, 3 signaux déphasés de 120° électriques ((4), (5), (6)) ainsi que le déphasage de ces signaux de sonde par rapport aux constantes de couple ((7),(8),(9)) des 3 phases ((19),(20),(21)) de la figure 1. La présence de ces sondes dans la partie statorique du moteur permet un gain de place notable, avec une phase à 120° idéale assurée par le positionnement entre 2 dents de 2 phases juxtaposées. Le but de la présence de ces 3 sondes est de donner à une électronique de pilotage, appelée "logique de commutation" dans le texte de ce brevet des informations de position du rotor à 5 paires de pôles (22) de la figure 1. En fonction de ces informations de position du rotor, la logique de commutation va donner les instructions nécessaires à une électronique de "logique de contrôle" qui pilote les 6 transistors utilisés dans le cas d'un moteur triphasé par exemple (4 transistors pour un moteur diphasé). Ce mode de pilotage, appelé "autocommutation" permet de régler de façon optimale le déphasage du courant par rapport aux constantes de couple de chaque phase (puisqu'il se fait de façon automatique par rapport à la position du rotor) et de minimiser l'ondulation de couple qui serait pénalisante par la suite dans l'asservissement de position.

De tels ensembles nécessitent un circuit électronique de commande recevant d'une part un signal d'entrée provenant du capteur de recopie de la position angulaire de l'arbre de sortie, et d'autre par les signaux d'entrée provenant de chacune des sondes de Hall.

On trouvera à la figure 3 un schéma d'ensemble de l'électronique de commande d'un moto-réducteur sans balais intégré à une application de contrôle de vanne, connu dans l'art antérieur : la logique de contrôle (13) aura donc à gérer, par l'intermédiaire d'un signal PWM (Pulse Width Modulated) (15) et d'un signal de sens de marche (direction) (16), les informations en provenance du microcontrôleur (10), responsable de la gestion de l'asservissement de position grâce à un convertisseur analogique/numérique (11) faisant l'acquisition du signal du potentiomètre de sortie (12), et les informations en provenance de la logique de commutation (14) qui donne les informations relatives à la position du rotor (22). La logique de contrôle (13) va piloter l'étage de puissance (33) chargé d'imposer le courant dans chaque phase ((19),(20),(21)) et d'entraîner le rotor (22) lié au pignon d'entrée du réducteur de vitesse (23), qui entraîne l'arbre de sortie sur le quel est monté le capteur de position absolu (24). On doit donc imaginer que l'on a deux boucles d'asservissement imbriquées :
a)une boucle d'asservissement de position où le microcontroleur, par l'intermédiaire du signal de PWM agissant sur la logique de contrôle et donc sur les transistors (33) d'une part, va moduler le niveau de courant vu par les phases du moteur, et par l'intermédiaire du signal de direction d'autre part, agissant sur la logique de commutation (14) va définir le sens de rotation du moteur. Cette boucle d'asservissement est d'un type identique à celle d'un asservissement de moteur à courant continu.
b) Une boucle d'autocommutation qui va agir sur la logique de contrôle (13) par l'intermédiaire de la logique de commutation (14), et autoriser une séquence d'alimentation des phases en fonction de l'état des signaux de sondes SA,SB,SC ((4), (5), (6)).

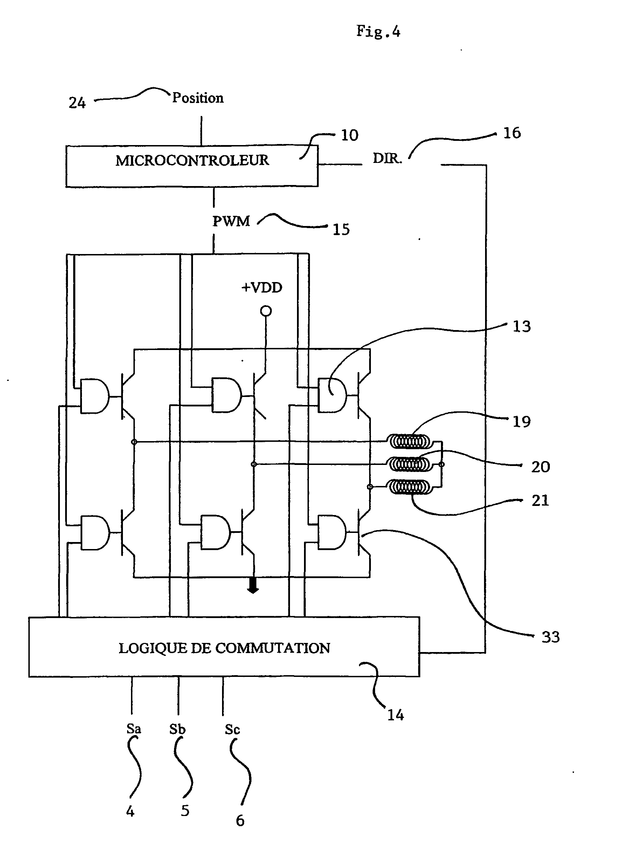

Le détail de l'imbrication de ces deux boucles est repris à la figure 4, où la logique de contrôle est représentée par les portes logiques ET pilotant les 6 transistors.

L'inconvénient de ces solutions autocommutées par 3 sondes de l'art antérieur est le grand nombre de fils nécessaires. Chacune des sondes possède 3 fils de connexion (+5V, masse et signal), le moteur triphasé comporte au moins 3 fils de connexion, et le potentiomètre redondant peut comporter 4 fils (+5V, masse et 2 outputs). Les applications avec moteur à courant continu sans balai triphasé de la figure 1 peuvent donc se trouver connectées par 10 fils (+5V, masse, 3 signaux de sondes, 3 fils de connexion moteur, 2 signaux du potentiomètre redondant) alors que la même application avec moteur courant continu à balai telle que décrite dans la solution Bosch US 5,672,818 ne comportera que 6 fils.

Le document US-A-5 452 697 décrit un actionneur électrique correspondant au préambule de la revendication 1.

Le but de la présente invention est d'éviter à la fois les inconvénients des actionneurs à moteur à balai, et des actionneurs à moteur sans balai, en proposant un actionneur comportant un moteur sans balai ne nécessitant qu'un nombre réduit de fils de câblage.

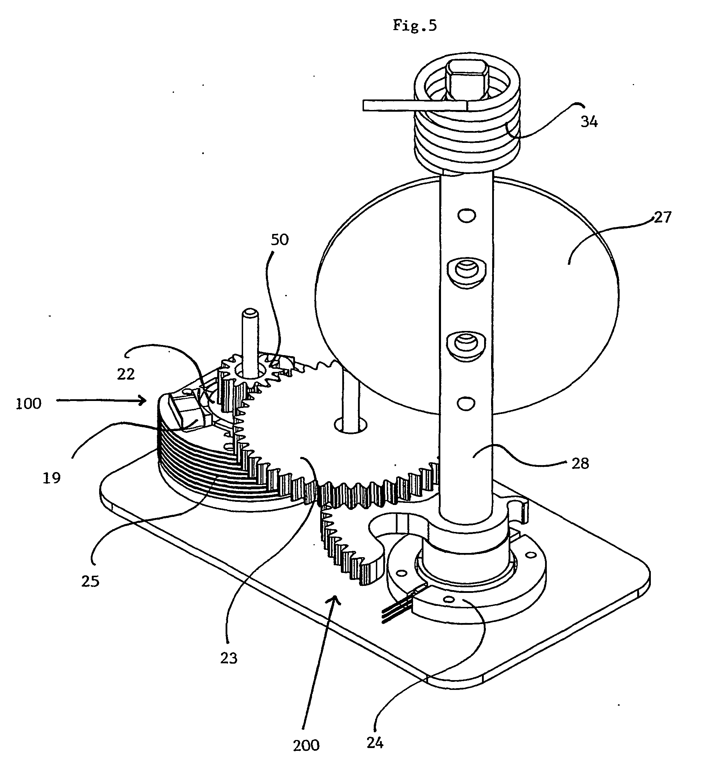

La présente invention concerne des actionneurs électriques constitués d'au moins :
- un moteur synchrone sans balai (100) polyphasé possédant P phases et N paires de pôles au rotor (22)
- un réducteur de vitesse mécanique (23) à engrenages de rapport 1/R et de jeu angulaire j
- un ressort de rappel (34) sur une position de référence de l'arbre de sortie (28) appelée θ₀
- un capteur de position absolu (24) fournissant une information de position exprimée en mV/°, ou dans le cas de sorties PWM pouvant être traitée en mV/°, de résolution r exprimée en degrés.
   et est particulièrement adaptée au contrôle de vannes à course limitée dans le domaine automobile. On trouvera à la figure 5 un descriptif de l'application type pour une vanne papillon d'admission d'air (27).

Un tel actionneur selon l'invention exploite la présence du capteur potentiométrique, ou sans contact, de recopie de position de l'arbre de sortie pour déduire la position du rotor du moteur synchrone sans balai, et permet ainsi de diminuer le nombre de sondes et donc de connexions nécessaires. L'autocommutation du moteur brushless ne se fait plus par une information de position prise directement sur le rotor du moteur mais par une information de position indirecte en sortie de l'application.

L'invention concerne selon son acception la plus générale un actionneur électrique constitué d'au moins un moteur synchrone sans balais autocommuté à P phases, P étant un nombre entier compris entre 1 et 6, et N paires de pôles au rotor, N étant un nombre entier supérieur ou égal à 1, l'actionneur comprenant un capteur de position dont le signal de sortie commande un circuit électronique de pilotage du moteur, le rotor dudit moteur entraînant un mécanisme réducteur de vitesse de rapport R, la course de l'arbre de sortie du réducteur de vitesse étant inférieure à 360° caractérisé en ce que ledit capteur de position absolu est accouplé [non pas au rotor mais] à l'arbre de sortie du réducteur pour mesurer la position angulaire absolue de l'arbre de sortie du réducteur, le circuit électronique comportant un circuit de pilotage séquentiel du courant de chacune des phases réalisant une commutation automatique des séquences d'alimentation des phases en fonction de la position absolue de l'arbre de sortie du réducteur.

Par capteur de position absolu, on entend un capteur de position comportant moyen de référence assurant une position de référence invariable, fournissant une information ne prenant jamais deux fois la même valeur sur la course, contrairement à un capteur incrémental. Le capteur mis en oeuvre par l'invention est un capteur fournissant un signal correspondant à une fonction injective de la position angulaire, c'est à-dire un capteur dont toute valeur du signal de sortie est l'image d'au plus une valeur de position angulaire sur la course de l'arbre de sortie du réducteur.

Ce moyen de référence peut être constitué par un moyen de rappel de l'arbre de sortie assurant une compensation du jeu.

Il peut également être constitué par un mécanisme réducteur présentant un jeu inférieur à la résolution r et par un capteur présentant une résolution r ≤ 180/(N.P.R) avec :
- N désigne le nombre de paires de pôles au rotor
- P désigne le nombre de phases du rotor
- R désigne le rapport de réduction

Le capteur entraîné par l'arbre de sortie du réducteur délivre un signal correspondant à une fonction injective de la position angulaire dudit arbre de sortie.

Selon une autre variante, le moyen de référence est constitué par un capteur de position additionnel entraîné directement par le rotor du moteur. Ce capteur de position additionnel délivre un signal de synchronisation du circuit de commande du moteur.

Avantageusement, ledit réducteur de vitesse mécanique présente un rapport de réduction R supérieur à 2.

Selon une variante particulière, le moyen de rappel de l'arbre est constitué par un ressort spiral dont l'une des extrémités est solidaire de l'arbre de sortie et l'autre extrémité est solidaire d'un point fixe.

Selon un autre mode de réalisation permettant d'éviter le recours à un ressort ou à un moyen de rappel, le réducteur mécanique de vitesse présente un jeu inférieur à 180/(N.P.R)

De préférence, le capteur de position présente une résolution r inférieure à 180/(N.P.R) degrés.

Selon une variante particulière, le circuit électronique comporte une entrée pour recevoir le signal délivré par le capteur de position absolue de l'arbre de sortie du réducteur, et P sorties délivrant chacune un signal de pilotage de l'une des P phases du moteur, avec un déphasage de 360/P entre deux phases consécutives, N désignant le nombre de paires de pôles du moteur.

Selon un mode de mise en oeuvre particulier, le circuit électronique comporte en outre une entrée de recalage recevant un signal délivré par un capteur de position additionnel entraîné directement par le rotor.

Avantageusement, le circuit électronique comporte en outre une entrée pour recevoir un signal de référence correspondant à la position angulaire désirée, le circuit électronique réalisant une première boucle d'asservissement agissant sur l'intensité du couple moteur et une deuxième boucle d'autocommutation commandant les états de courant dans les phases du moteur.

Selon une autre variante, l'électronique de pilotage des phases est constituée d'un étage de puissance à transistors pilotés par un étage de contrôle logique imposant la séquence d'alimentation et l'amplitude du courant des P phases.

De préférence, l'étage de contrôle logique est constitué d'un microcontrôleur possédant au moins P sorties du type PWM permettant de régler de façon indépendante le courant de chacune des P phases.

Selon un exemple de mise en oeuvre, l'électronique de pilotage des phases possède une séquence d'initialisation, à la mise sous tension, sur une position de référence définie par le ressort de rappel.

La présente invention sera mieux comprise à la lecture de la description d'un exemple non limitatif de réalisation qui suit, se référant aux dessins annexés où :
- la figure 1 représente une vue schématique d'un actionneur selon l'art antérieur,
- la figure 2 représente les signaux électriques correspondant à un actionneur de l'art antérieur,
- les figures 3 et 4 représentent une vue du circuit de commande d'un actionneur selon l'art antérieur,
- la figure 5 représente une vue schématique d'un actionneur selon l'invention,
- la figure 6 représente une vue en détail du capteur de position entraîné par l'arbre de sortie,
- les figures 7 à 9 représentent une vue du circuit de commande d'un actionneur selon l'invention,
- la figure 10 représente les signaux de sortie du capteur de position,
- la figure 11 représente un diagramme électrique vectoriel d'un actionneur selon l'invention, pour une position visée (en l'occurrence 150° sur la figure),
- la figure 12 représente une vue d'une variante du circuit de commande, comportant un élément de détection additionnel (51) placé dans le moteur et délivrant un signal digital de synchronisation fonction de la position directe du rotor.

L'invention décrite à titre d'exemple dans ce qui suit comporte un moteur (100) triphasé à 5 paires de pôles tel que celui exposé à la figure 1. Il comprend de façon connue un stator (25) présentant trois épanouissements statoriques excités par des bobines électriques (19).

Le rotor (22) présente 5 paires de pôles et comporte une alternance d'aimants minces aimantés radialement, selon des sens alternés. Il entraîne une roue dentée (50) entraînant le réducteur de vitesse (200) constitué par un train d'engrenages.

L'arbre de sortie (28) du moto-réducteur supporte dans l'exemple décrit une vanne papillon (27). Un ressort de rappel (34) constitué par un ressort spiral agit sur l'arbre de sortie (28). La course de l'arbre de sortie (28) est inférieure à 360°.

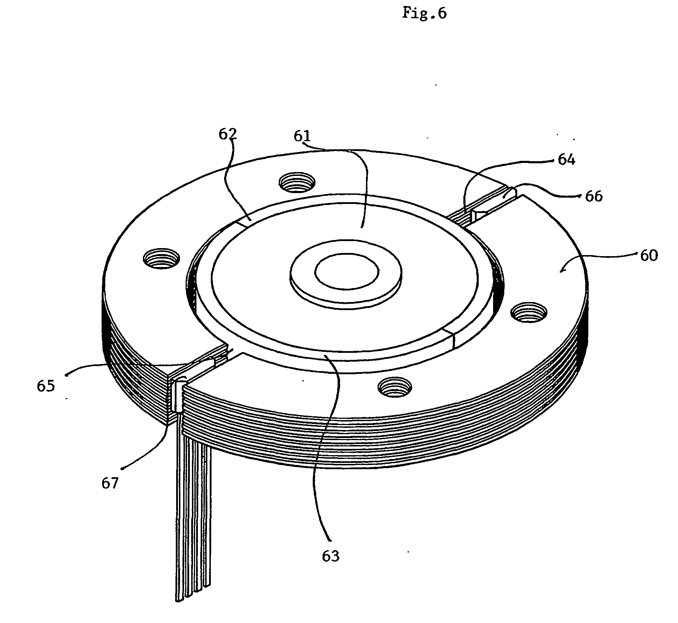

L'arbre de sortie entraîne directement un capteur de position (24) représenté en détail en figure 6. Ce capteur de position est constitué par un stator (60) et un rotor (61) comprenant deux aimants minces (62, 63) de forme semi-tubulaire, aimanté radialement en sens opposés. Le stator (60) présente dans l'exemple décrit deux entrefers (64, 65) dans lesquels sont logées deux sondes de Hall (66, 67).

Ce capteur (24) délivre des signaux représentatifs de la position angulaire réelle de l'arbre de sortie (28) du moto réducteur.

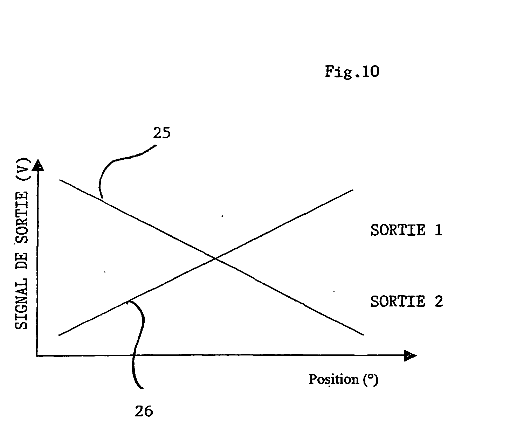

Le signal délivré par un tel capteur de position absolu est équivalent à celui d'un capteur potentiométrique et est un signal analogique constitué par une tension sensiblement proportionnelle à la position angulaire, avec une résolution inférieure à 0.1°. Dans le cas de contrôle de vanne d'admission d'air pour moteur à injection, le capteur de position absolu délivre 2 signaux redondants (25, 26) (fig.10).

La commande du moteur (100) nécessite un changement d'état tous les 12° pour un moteur triphasé à 5 paires de pôles, ce qui correspond à une condition de changement d'état tous les 180/(N.P) degrés pour l'autocommutation d'un moteur à P phases et N paires de pôles au rotor.

Dans l'actionneur décrit en figure 5, le capteur 24 fournit un signal fonction injective de la position angulaire du moteur (100). Si on néglige le jeu j du réducteur, un incrément de position (θ-θ₀) sur l'arbre de sortie correspond à un incrément de position R. (θ-θ₀) au rotor du moteur. Pour pouvoir assurer l'autocommutation avec un actionneur conforme à l'exemple décrit, il est nécessaire qu'un changement d'état intervienne pour chaque incrément de position du rotor égal à 12°.

La résolution r nécessaire pour le potentiomètre de sortie est donc θ-θ₀ = 12°/R = r.

Dans le cadre de l'application de la vanne papillon d'admission d'air, le rapport de réduction R vaut sensiblement 20. Donc la résolution r requise au capteur sera de 0.6°. Il faut savoir que les résolutions habituelles de ces capteurs sont de l'ordre de 0.15°.

De manière générale, pour un moteur à P phases et N paires de pôles au rotor, la résolution minimale requise au capteur est r ≤ 180/(N.P.R) avec :
- N désigne le nombre de paires de pôles au rotor
- P désigne le nombre de phases du rotor
- R désigne le rapport de réduction.

Si l'arbre de sortie ne fonctionne pas contre un ressort de rappel (34) tel que décrit ci-dessus il est impératif que le jeu j du réducteur soit inférieur à 180/(N.P.R) pour qu'un mouvement du rotor correspondant à la condition de résolution minimale nécessaire se traduise par un mouvement de l'arbre de sortie. Néanmoins dans la plupart des applications traitées nous considérerons que le jeu j du réducteur est toujours rattrapé par le ressort (34).

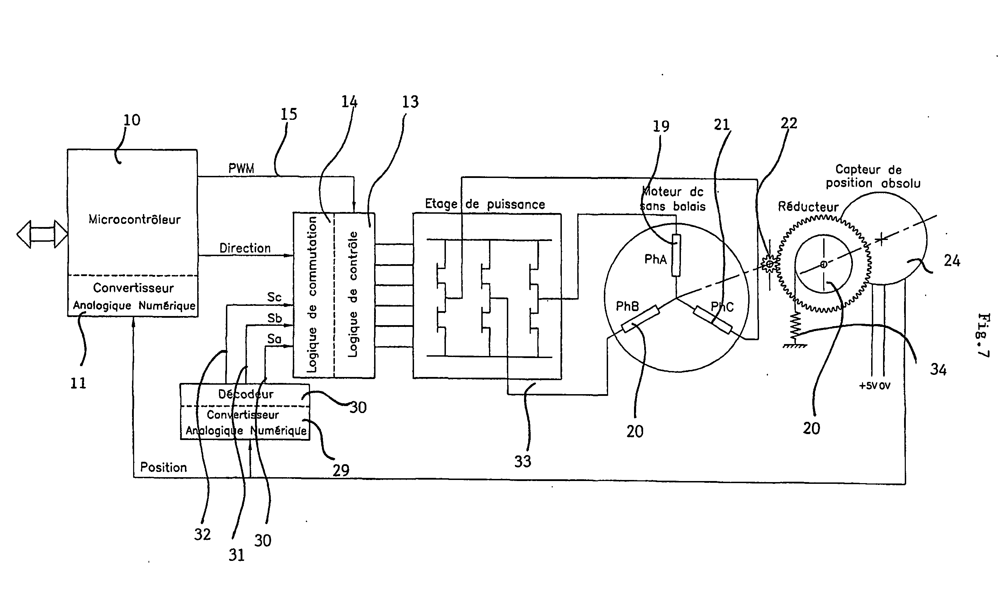

On trouvera à la figure 7 une première variante de l'invention, où le signal de sortie du capteur (24), est converti, à l'aide du convertisseur analogique numérique (29) en un signal numérique. Ce signal numérique est ensuite traité par un décodeur chargé de fournir sur 3 voies SA, SB, SC (30),(31), (32) des signaux (4), (5), (6) équivalents à ceux des sondes (1), (2), (3) des figures 1 et 2. L'électronique de commutation fournit les informations de position du rotor à la logique de contrôle pour l'autocommutation. On voit l'avantage de cette solution qui permet de supprimer les 3 fils des sondes, et de ne pas avoir à sortir en direction de l'électronique logique de commutation, qui est souvent déportée, 3 signaux de sondes qui sont sensibles aux perturbations électromagnétiques.

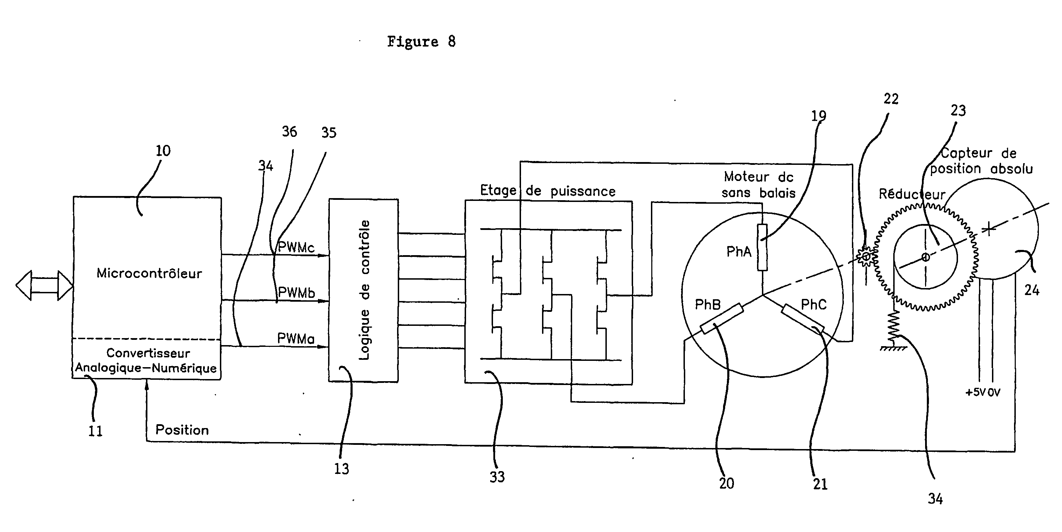

On trouvera à la figure 8 une seconde variante de l'invention, plus performante, dont le but est toujours de supprimer les 3 sondes à effet Hall ((1),(2),(3)), mais sans avoir à récréer une information identique à ces 3 signaux de sondes.

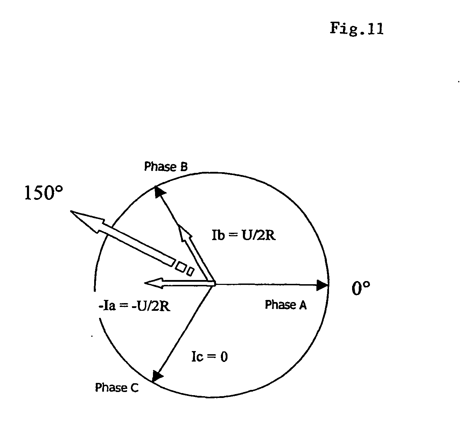

Le signal analogique du capteur absolu (24) est converti en une information numérique par le convertisseur analogique numérique (11) principal du microcontroleur (10), de la même manière que dans la boucle d'asservissement habituelle des figures 5 et 7. Mais ce signal numérique va être utilisé pour les 2 boucles d'asservissement décrites plus haut :
- la boucle d'asservissement de position classique identique à celle d'un moteur à courant continu, chargée de créer un effet sur l'intensité du couple moteur disponible et sur son signe
- la boucle d'autocommutation autorisant le passage d'un état de courant dans les phases P du moteur à l'état suivant, avec une avance de phase réglable comme expliqué plus loin à la figure 11.

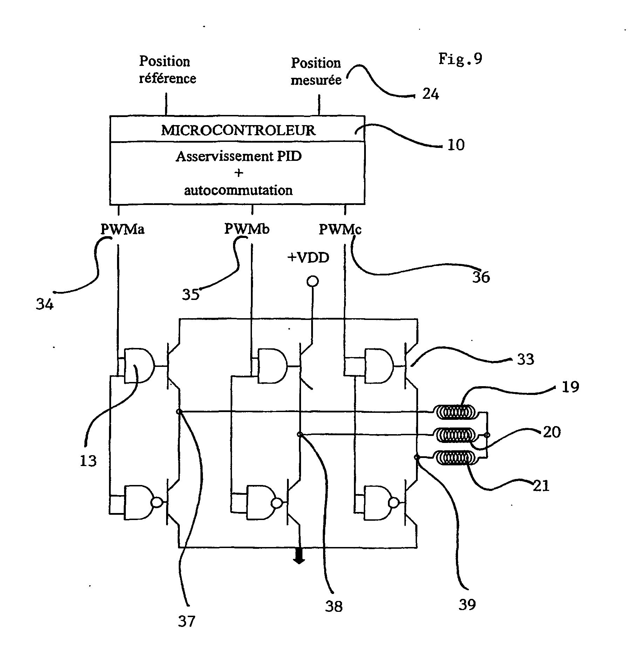

Contrairement à l'électronique décrite aux figures 7 et 8, les deux boucles ne sont plus physiquement séparées, mais traitées par software par le microprocesseur comme indiqué à la figure 9.

Le résultat de ces calculs des 2 boucles d'asservissement conduit à 2 réglages :
- un sens de rotation du rotor défini par la séquence d'alimentation des phases et un réglage de l'intensité du courant dans chacune des phases (mode asservissement de position).
- La détermination en fonction de la position du rotor du prochain état de courant dans les phases, avec un déphasage position actuelle/position visée réglable en fonction de la vitesse de rotation du rotor (mode autocommutation).

Ces 2 réglages sont obtenus en utilisant 3 sorties PWM du microcontroleur (PWMa (34), PWMb (35), PWMc (36)), qui vont moduler le facteur de marche des transistors de puissance (33). Le montage de la figure 9 décrit une alimentation en étoile, avec point milieu, du moteur triphasé. Chacune des phases (19), (20), (21) est pilotée par un demi-pont de transistors (33) qui doivent permettre d'appliquer aux points (37), (38), (39) des tensions du type :
- Ua = U cos N.R.θ(t) pour la phase A
- Ub = U cos (N.R.θ(t) + 120°) pour la phase B
- Uc = U cos (N.R.θ(t) + 240°) pour la phase C

L'angle θ(t) est la position recherchée pour l'arbre de sortie (28) de l'application décrite à la figure 5 constituée d'un moteur triphasé à N paires de pôles, d'un réducteur de rapport R et d'un potentiomètre, lorsque l'on alimente les 3 phases avec les tensions Ua, Ub, Uc. On peut représenter sur le cercle trigonométrique de la figure 11 la position N.R.θ(t) visée à l'intérieur d'une période électrique de 360° en fonction des courants Ia, Ib et Ic parcourant chacune des phases (19), (20, (21), les constantes de couples de chaque phase étant espacées de 120° électriques.

On voit sur ce cercle trigonométrique que n'importe quelle position peut être visée sur ce cercle, pour autant que la condition Ia + Ib + Ic, relative à l'addition des courants dans le cas d'une connexion avec point milieu, soit respectée. L'exemple de la figure 11 pour un moteur triphasé décrit une position de 150° électrique par rapport à l'origine 0°, soit une position de 1.5° sur l'arbre de sortie par rapport à la position de référence θ_{0,} est obtenu avec Ic = 0 et Ia = -Ib = U/2R ou U est la tension d'alimentation de l'application et R la résistance de chaque bobinage.

La position θ(t) de l'arbre de sortie va donc pouvoir être contrôlée par les 3 signaux PWMa, PWMb, PWMc, à l'aide d'une double boucle d'autocommutation et d'asservissement de position.

Nous avons vu auparavant les conditions requises sur la résolution r du capteur absolu, et il faut maintenant déterminer le mode d'initialisation de l'application décrite à la figure 5. Il est en effet très important que nous puissions relier à partir de cette séquence d'initialisation la position absolue de l'axe de sortie, donnée par le signal capteur, à la position absolue du rotor.

A la mise sous tension de l'application l'arbre de sortie sera dans la position de référence θ₀, ramené par le ressort de rappel, mais nous ne connaîtrons pas la position absolue du rotor. La méthode d'initialisation consiste alors à établir arbitrairement une séquence d'alimentation des phases telle que :
- Ua = U cos α(t) pour la phase A
- Ub = U cos α(t) +120° pour la phase B
- Uc = U cos α(t) + 240°) pour la phase C,

Avec α= 0 à t = 0 , de manière à provoquer une ouverture de la vanne, et pour une séquence d'une valeur égale à α(t) = k.360°. A la fin de cette séquence, la position visée pour le rotor est donc la position 0° indiquée sur la figure 11. Il suffit de repérer la position θ indiquée par le capteur absolu et de prendre cette valeur θ comme valeur initiale pour la nouvelle séquence.

La méthode d'autocommutation des phases et d'asservissement de position expliquée ici est valable pour tout type de moteur synchrone polyphasé possédant N paires de pôles au rotor et P phases, associé avec un réducteur, un ressort de rappel, un capteur de position absolu, c'est à dire aux moteurs :
- à aimant permanent
- hybride
- à réluctance variable

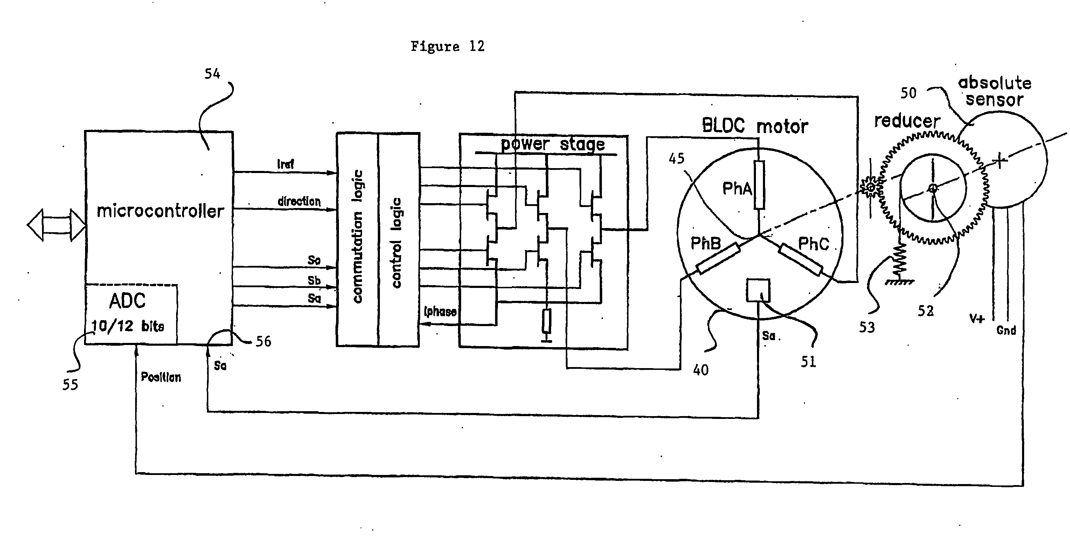

La figure 12 représente une vue d'une variante du circuit de commande, comportant un élément de détection additionnel (51) placé dans le moteur et délivrant un signal digital de synchronisation fonction de la position directe du rotor. Le moteur (40) comporte un capteur additionnel (51) entraîné directement par le rotor et délivrant un signal de référence en sus du signal de position fourni par le capteur de position absolue (50) entraîné par l'arbre de sortie (52). L'arbre de sortie est sollicité par un ressort de rappel (53) compensant le jeu du train d'engrenage.

Le capteur additionnel (51) est constitué par une sonde de Hall délivrant une signal fonction de la position directe de l'arbre moteur (45). Dans l'exemple d'un actionneur pour vanne-papillon, l'arbre moteur effectue une rotation de 5 tours pour une rotation de l'arbre de sortie du réducteur de 90°.

Le signal de sortie du capteur additionnel (51) fournit un signal de synchronisation (56) au microcontrôleur (54), permettant de recaler le signal (55) fournit par le capteur de position absolue (50). La synchronisation s'effectue dans l'exemple décrit 10 fois par tour.

## Revendications

1. Actionneur électrique constitué d'au moins un moteur synchrone sans balais autocommuté à P phases, P étant un nombre entier compris entre 1 et 6, et N paires de pôles au rotor, N étant un nombre entier supérieur ou égal à 1, l'actionneur comprenant un capteur de position dont le signal de sortie commande un circuit électronique de pilotage séquentiel du courant de chacune des phases, le rotor dudit moteur entraînant un mécanisme réducteur de vitesse de rapport R, la course de l'arbre de sortie du réducteur de vitesse étant inférieure à 360° **caractérisé en ce que** ledit capteur de position absolu est accouplé [non pas au rotor mais] à l'arbre de sortie du réducteur pour mesurer la position angulaire absolue de l'arbre de sortie du réducteur, le susdit circuit électronique de pilotage réalisant une commutation automatique des séquences d'alimentation des phases en fonction de la position absolue de l'arbre de sortie du réducteur.

2. Actionneur électrique selon la revendication 1 **caractérisé en ce qu'**il comporte un élément de détection additionnel (51), délivrant un signal de synchronisation fonction de la position directe du rotor.

3. Actionneur électrique selon la revendication 1 ou 2 **caractérisé en ce que** le capteur entraîné par l'arbre de sortie du réducteur délivre un signal correspondant à une fonction injective de la position angulaire dudit arbre de sortie.

4. Actionneur électrique selon la revendication 1, 2 ou 3 **caractérisé en ce que** ledit réducteur de vitesse comporte un moyen de rappel de l'arbre de sortie dans une position angulaire de référence.

5. Actionneur électrique selon la revendication 4 **caractérisé en ce que** le moyen de rappel de l'arbre est constitué par un ressort spiral dont l'une des extrémités est solidaire de l'arbre de sortie et l'autre extrémité est solidaire d'un point fixe.

6. Actionneur électrique selon la revendication 1, 2 ou 3 **caractérisé en ce que** le réducteur mécanique de vitesse présente un jeu inférieur à 180/(N.P.R).

7. Actionneur électrique selon l'une quelconque des revendications précédentes **caractérisé en ce que** le capteur de position présente une résolution r inférieure à 180/(N.P.R) degrés.

8. Actionneur électrique selon l'une quelconque des revendications précédentes **caractérisé en ce que** le circuit électronique comporte une entrée pour recevoir le signal délivré par le capteur de position absolue de l'arbre de sortie du réducteur, et P sorties délivrant chacune un signal de pilotage de l'une des P phases du moteur, avec un déphasage de 360/P entre deux phases consécutives.

9. Actionneur électrique selon la revendication 8 **caractérisé en ce que** le circuit électronique comporte en outre une entrée pour recevoir un signal de référence correspondant à la position angulaire désirée, le circuit électronique réalisant une première boucle d'asservissement agissant sur l'intensité du couple moteur et une deuxième boucle d'autocommutation commandant les états de courant dans les phases du moteur.

10. Actionneur électrique selon l'une quelconque des revendications précédentes **caractérisé en ce que** l'électronique de pilotage des phases est constitué d'un étage de puissance à transistors pilotés par un étage de contrôle logique imposant la séquence d'alimentation et l'amplitude du courant des P phases.

11. Actionneur électrique selon l'une quelconque des revendications précédentes **caractérisé en ce que** l'étage de contrôle logique est constitué d'un microcontrôleur possédant au moins P sorties du type PWM permettant de régler de façon indépendante le courant de chacune des P phases.

12. Actionneur électrique selon l'une quelconque des revendications précédentes **caractérisé en ce que** l'électronique de pilotage des phases possède une séquence d'initialisation, à la mise sous tension, sur une position de référence définie par le ressort de rappel.

13. Actionneur électrique selon l'une quelconque des revendications précédentes, **caractérisé en ce que** ledit réducteur de vitesse mécanique présente un rapport de réduction R supérieur à 2.

## Claims

1. Electric actuator composed of at least one switched brushless synchronous motor with P phases where P is an integer between 1 and 6, and N pairs of poles at the rotor where N is an integer greater than or equal to 1, the actuator including a position sensor for which the output signal controls an electronic sequential current control circuit for each phase, the rotor of the said motor driving a speed reduction mechanism with ratio R, the stroke of the output shaft of the speed reducer being less than 360°, **characterised in that** the said absolute position sensor is coupled [not to the rotor but] to the output shaft of the reducer to measure the absolute angular position of the reducer output shaft, the electronic control circuit mentioned above automatically switching phase power supply sequences as a function of the absolute position of the reducer output shaft.

2. Electric actuator according to claim 1, **characterised in that** it includes an additional detection element (51), outputting a synchronisation signal that depends on the direct position of the rotor.

3. Electric actuator according to claim 1 or 2, **characterised in that** the sensor driven by the reducer output shaft outputs a signal corresponding to an injective function of the angular position of the said output shaft.

4. Electric actuator according to claim 1, 2 or 3, **characterised in that** the said speed reducer includes an operating device for returning the output shaft to an angular reference position.

5. Electric actuator according to claim 4, **characterised in that** the operating device is composed of a spiral spring, one end of which is fixed to the output shaft and the other end is fixed to a fixed point.

6. Electric actuator according to claim 1, 2 or 3, **characterised in that** the mechanical speed reducer has a clearance inferior to 180/(N.P.R).

7. Electric actuator according to any one of the previous claims **characterised in that** the position sensor has a resolution r inferior to 180/(N.P.R) degrees.

8. Electric actuator according to any one of the previous claims, **characterised in that** the electronic circuit includes one input to receive the signal given by the absolute position sensor of the reducer output shaft, and P outputs each giving a control signal for one of the P phases of the motor with a phase shift of 360/P between two consecutive phases.

9. Electric actuator according to claim 8, **characterised in that** the electronic circuit also comprises an input to receive a reference signal corresponding to the required angular position, the electronic circuit making a first feedback loop modifying the intensity of the motor torque and a second self-switching loop controlling the current states in the motor phases.

10. Electric actuator according to any one of the previous claims, **characterised in that** the phase control electronics is composed of a transistor power stage controlled by a logical control stage imposing the power supply sequence and the current amplitude of the P phases.

11. Electric actuator according to any one of the previous claims, **characterised in that** the logical control stage is composed of a microcontroller with at least P outputs of the PWM type to independently adjust the current in each of the P phases.

12. Electric actuator according to any one of the previous claims, **characterised in that** the phase control electronics has an initialisation sequence when power is switched on, on a reference position defined by the return spring.

13. Electric actuator according to any one of the previous claims, **characterised in that** the said mechanical speed reducer has a reduction ratio R of more than 2.

## Patentansprüche

1. Elektrisches Stellglied, das zumindest einen selbsttätigen synchronen Motor ohne Bürsten mit P Phasen umfasst, wobei P einer ganzen Zahl zwischen 1 und 6 entspricht, und N Paare von Polen am Rotor umfasst, wobei N einer ganzen Zahl über oder gleich 1 entspricht, und wobei das Stellglied einen Positionssensor umfasst, dessen Ausgangssignal einen elektronisches Kreis zur sequentiellen Steuerung des Stroms von jeder der Phasen steuert, wobei der Roter des weiter oben genannten Rotors einen Mechanismus zur Reduzierung der Geschwindigkeit des Verhältnisses R antreibt, wobei der Hub der Ausgangswelle des Geschwindigkeitsreduzierers kleiner als 360° ist, **dadurch gekennzeichnet, dass** der oben genannte absolute Positionssensor angekoppelt ist, (und dies nicht an den Rotor sondern) an die Ausgangswelle des Reduzierers, um die absolute angulare Position der Ausgangswelle des Reduzierers zu messen, wobei der weiter oben genannte elektronische Steuerungskreis eine automatische Kommutierung der Sequenzen der Versorgung der Phasen in Abhängigkeit von der absoluten Position der Ausgangswelle des Reduzierers realisiert.

2. Elektrisches Stellglied nach Anspruch 1, **dadurch gekennzeichnet, dass** es ein zusätzliches Erkennungselement (51) umfasst, dass ein Synchronisierungssignal in Abhängigkeit von der direkten Position des Rotors liefert.

3. Elektrisches Stellglied nach Anspruch 1 oder 2, **dadurch gekennzeichnet, dass** der Sensor, der von der Ausgangswelle des Reduzierers angetrieben wird, ein Signal liefert, das einer injektiven Funktion von der angularen Position der genannten Ausgangswelle entspricht.

4. Elektrisches Stellglied nach Anspruch 1, 2 oder 3, **dadurch gekennzeichnet, dass** der genannte Geschwindigkeitsreduzierer ein Rückstellmittel der Ausgangswelle in einer angularen Bezugsposition umfasst.

5. Elektrisches Stellglied nach Anspruch 4, **dadurch gekennzeichnet, dass** das Rückstellmittel der Welle aus einer Spiralfeder besteht, von der das eine Ende solidarisch mit der Ausgangswelle ist und von der das andere Ende solidarisch mit einem festen Punkt ist.

6. Elektrisches Stellglied nach Anspruch 1, 2 oder 3, **dadurch gekennzeichnet, dass** der mechanische Geschwindigkeitsreduzierer ein Spiel aufweist, das kleiner als 180 / (N. P. R.) ist.

7. Elektrisches Stellglied nach einem der vorhergehenden Ansprüche, **dadurch gekennzeichnet, dass** der Positionssensor eine Resolution r aufweist, die kleiner als 180 / (N. P. R.) Grad ist.

8. Elektrisches Stellglied nach einem der vorhergehenden Ansprüche, **dadurch gekennzeichnet, dass** der elektronische Kreis einen Eingang aufweist, um das Signal zu empfangen, das vom Sensor der absolution Position der Ausgangswelle des Reduzierers geliefert wird, und P Ausgänge, die jeweils ein Steuerungssignal für die eine der P Phasen des Motors liefern, mit einer Phasenverschiebung von 360 / P zwischen zwei konsekutiven Phasen.

9. Elektrisches Stellglied nach Anspruch 8, **dadurch gekennzeichnet, dass** der elektronische Kreis darüber hinaus einen Eingang umfasst, um ein Bezugssignal zu empfangen, das der gewünschten angularen Position entspricht, wobei der elektronische Kreis einen ersten Regelkreis realisiert, der auf die Intensität des Drehmoments vom Motor wirkt, und einen zweiten Regelkreis, der die Zustände des Stroms in den Phasen des Motors steuert.

10. Elektrisches Stellglied nach einem der vorhergehenden Ansprüche, **dadurch gekennzeichnet, dass** die Elektronik der Steuerung der Phasen aus einer Leistungsstufe mit Transistoren besteht, die durch eine logische Steuerstufe gesteuert werden, die die Versorgungssequenz und die Amplitude des Stroms der P Phasen auferlegt.

11. Elektrisches Stellglied nach einem der vorhergehenden Ansprüche, **dadurch gekennzeichnet, dass** die logische Steuerstufe aus einem Mikrosteuergerät besteht, das mindestens 9 Ausgänge des Typs PWM aufweist, wodurch auf unabhängige Art der Strom von jeder der P Phasen geregelt werden kann.

12. Elektrisches Stellglied nach einem der vorhergehenden Ansprüche, **dadurch gekennzeichnet, dass** die Elektronik der Steuerung der Phasen eine Initialisierungssequenz aufweist, bei der Unterspannungssetzung, auf einer Bezugsposition, die durch die Rückstellfeder definiert ist.

13. Elektrisches Stellglied nach einem der vorhergehenden Ansprüche, **dadurch gekennzeichnet, dass** der weiter oben genannte mechanische Geschwindigkeitsreduzierer ein Reduktionsverhältnis R aufweist, das größer als 2 ist.
